# EUROPEAN PATENT SPECIFICATION

(11) **EP 1 500 855 B1**
(45) Date of publication and mention of the grant of the patent: **23.05.2007**
(21) Application number: 04016234.9
(22) Date of filing: 09.07.2004
(51) Int. Cl.: F16K 15/04, F16K 17/04

(54) **Pressure control valve**
Druckregelventil
Vanne de régulation de la pression

(30) Priority: 22.07.2003 US 624174
(43) Date of publication of application: 26.01.2005
(73) Proprietor: TI Group Automotive Systems, L.L.C., Warren Michigan 48090-2001 (US)
(72) Inventor: Talaski, Edward J., Caro MI 48723 (US)
(74) Representative: Hauck Patent- und Rechtsanwälte

(56) References cited:
- WO-A-02/25148
- WO-A-98/57082
- CA-A- 2 264 497
- DE-A- 10 014 191

## Description

### Field of the Invention

This invention relates to a valve, and more particularly to a fluid pressure control valve.

### Background of the Invention

Hydraulic circuits incorporate valves such as pressure relief valves for various reasons, including to protect components, and to ensure the operational safety of the system. There are various valves in the prior art that are used to control the pressure of fluids, which include liquids and gases. One valve uses a sphere or valve ball yieldably biased by a spring or other mechanism against a valve seat to seal the valve and control the, "cracking" or initial opening pressure, and relief pressure. Once the cracking pressure is reached, the valve ball is forced off of the valve seat, and fluid flows through the valve seat. The valve ball moves back onto the valve seat by the biasing mechanism when the pressure is reduced and the relief pressure is reached.

Valves having a valve bore of a cylindrical or frustoconical shape can have undesirable changes in operating pressure at various flow rates, including especially, high flow rates. These valves typically require unduly increased fluid pressure to cause increased valve opening, and this can cause, for example, variation in operating characteristics relative to fluid flow rate.
A pressure control valve as defined in the preamble of claim 1 has become known from WO 98/57082A.

### Summary of the Invention

The invention and further developments and modifications of the invention have been defined in the patent claims.

A pressure control valve has a non-uniformly tapered valve bore that has an increasing diameter as it extends downstream. An interface angle, defined between a valve ball and the valve bore in the area of the smallest gap between them, increases as the valve ball is increasingly displaced away from a valve seat of the valve bore.

As the interface angle increases, the effective surface area of the valve ball acted upon by upstream fluid pressure increases, providing increased force acting on the ball from the upstream fluid. In this regard, the change in the interface angle, and hence the change in the effective surface area of the valve ball, can be controlled with regard, for example, to the spring constant of a spring that yieldably biases the ball against the valve seat. In one form, the valve can be used as a pressure relief valve and the interface angle and hence, the effective surface area of the valve ball, can be made to offset the increased spring force acting on the valve ball as it is increasingly displaced away from the valve seat. Thus, a relatively flat or constant pressure curve can be obtained for the relief valve over a wide range of fluid flow rates. Of course, the valve can be used in applications other than as a pressure relief valve.

In one presently preferred embodiment, the valve bore has a frustoconical portion defining the valve seat and a concave portion downstream of the frustoconical portion, with the concave portion being non-linearly or non-uniformly and preferably arcuately tapered. In another presently preferred embodiment, the valve bore has a plurality of straight, linearly tapered segments disposed at varying angles such that the valve bore does not have a straight or constant linear taper along its entire axial length.

### Brief Description of the Drawings

These and other objects, features and advantages of the present invention will be apparent from the following detailed description of the preferred embodiments, appended claims and accompanying drawings in which:

FIG. 1 is an end view of a pressure control valve according to one presently preferred embodiment of the invention;

FIG. 2 is a cross-sectional view taken generally along line 2-2 in FIG. 1;

FIG. 3 is a cross-sectional view taken generally along line 3-3 in FIG. 1;

FIG. 4 is a fragmentary sectional view of another embodiment of a pressure control valve illustrating a valve ball in its closed position on a valve seat;

FIG. 5 is a fragmentary sectional view like FIG. 4 illustrating the valve ball displaced a first distance from the valve seat;

FIG. 6 is a fragmentary sectional view like FIG. 4 illustrating the valve ball displaced a second distance from the valve seat;

FIG. 7 is a fragmentary sectional view like FIG. 4 illustrating the valve ball displaced a third distance from the valve seat;

FIG. 8 is a fragmentary sectional view of a pressure control valve constructed according to another presently preferred embodiment of the invention; and

FIG. 9 is a graph of a pressure curve for one exemplary pressure control valve.

### Detailed Description of the Preferred Embodiments

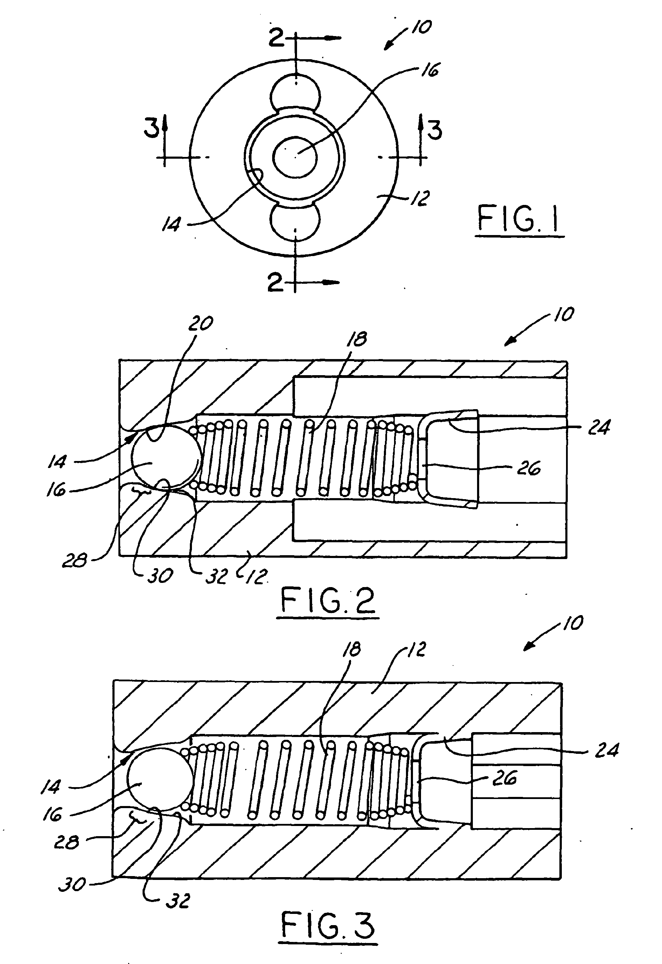

Referring in more detail to the drawings, FIGS. 1-3 illustrate a pressure control valve 10 having a valve body 12 with a valve bore 14 formed therein, and a valve head 16, shown in this embodiment as a spherical ball, disposed within the valve bore 14 to control the flow of fluid through the bore. In one presently preferred embodiment, the pressure control valve 10 acts as a pressure relief valve. The valve ball 16 is yieldably biased, such as by a spring 18, against a valve seat 20 portion of the valve bore 14 which has a diameter smaller than the diameter of the valve ball. When the valve ball 16 is seated against the valve seat 20, fluid does not flow through the valve bore 14. When the pressure of fluid upstream of the valve seat 20 exceeds a predetermined maximum fluid pressure, the valve ball 16 is displaced by the force of the fluid against the force of the spring 18, providing a flow area or a gap 22 (e.g. as shown in FIGS. 5-7) between the valve ball 16 and the valve bore 14 through which fluid may flow. When the pressure of the fluid drops below the predetermined maximum fluid pressure, the valve ball 16 again will become seated on the valve seat 20.

The operating pressure of the valve 10 can be controlled by the initial spring force and the spring rate of the spring 18 that yieldably biases the valve ball 16 against the valve seat 20. The initial spring force can be changed by varying the initial compression of the spring 18, such as by adjusting the position of a spring seat 24 preferably pressed into the valve bore 14 behind the spring 18. The spring seat 24 preferably has an interference fit with the valve bore 14 and includes an opening 26 through which fluid may flow.

In the presently preferred embodiment, the valve seat 20 is defined in a generally linearly tapered or frustoconical portion 28 of the valve bore 14. This frustoconical portion 28 extends axially and radially outwardly as it extends downstream to a transition point 30 at the downstream end of the frustoconical portion. Downstream of the transition 30, a concave portion 32 is formed in the valve bore 14.

The concave portion 32 has a diameter that increases from its upstream end to its downstream end. The diameter of the concave portion 32 does not increase linearly as in the frustoconical section 28. Rather, the valve bore 14 in the area of the concave portion 32 is somewhat curved or arcuate. Accordingly, as the concave portion 32 extends downstream, its diameter increases as a function of the curvature of the valve bore 14 in this area. The minimum gap or flow area 22 between the valve body 12 and the valve ball 16 varies as a function of the axial displacement of the valve ball 16 away from the valve seat 20. The minimum gap or flow area 22 is defined by the portion of the valve bore 14 that is closest to the valve ball 16, and this changes as the valve ball is displaced relative to the valve seat.

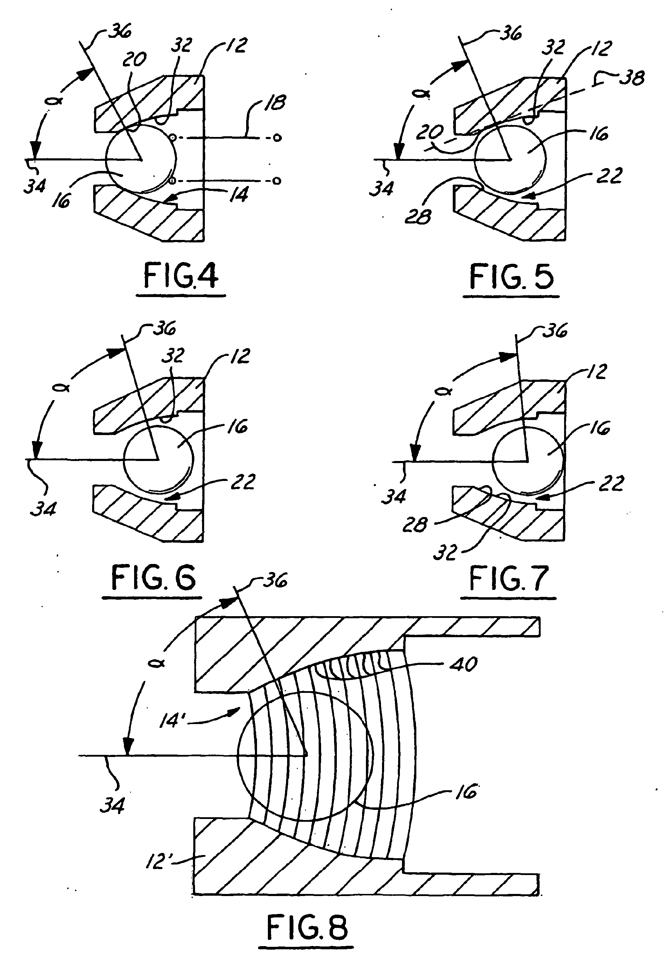

As shown in FIGS. 4-7, which illustrate an alternate embodiment valve having a valve bore of slightly different shape than in FIGS. 1-3, an interface angle α is defined between an axis 34 of the valve bore 14, and an interface line 36 that defines the shortest distance between the valve head and the valve bore 14. In other words, the interface line 36 connects the point on the valve head and the point on the valve bore 14 that define the minimum gap between the valve head and valve bore. With a spherical valve ball 16 as the valve head, the interface line 36 intersects the center of the valve ball 16 and the surface of the valve bore 14 closest to the valve ball 16. As shown in FIG. 5, at least with a curved or arcuate concave portion 32 and a spherical valve ball 16, the interface line 36 is perpendicular to a line 38 tangent to the valve bore at the location of the valve bore that is closest to the valve ball for a particular axial position of the valve ball. As illustrated in FIGS. 4-7, the interface angle α increases as the valve ball 16 is displaced further away from the valve seat 20. This is due to the non-uniform increase in the diameter of the concave portion 32 of the valve bore 14 as it extends downstream.

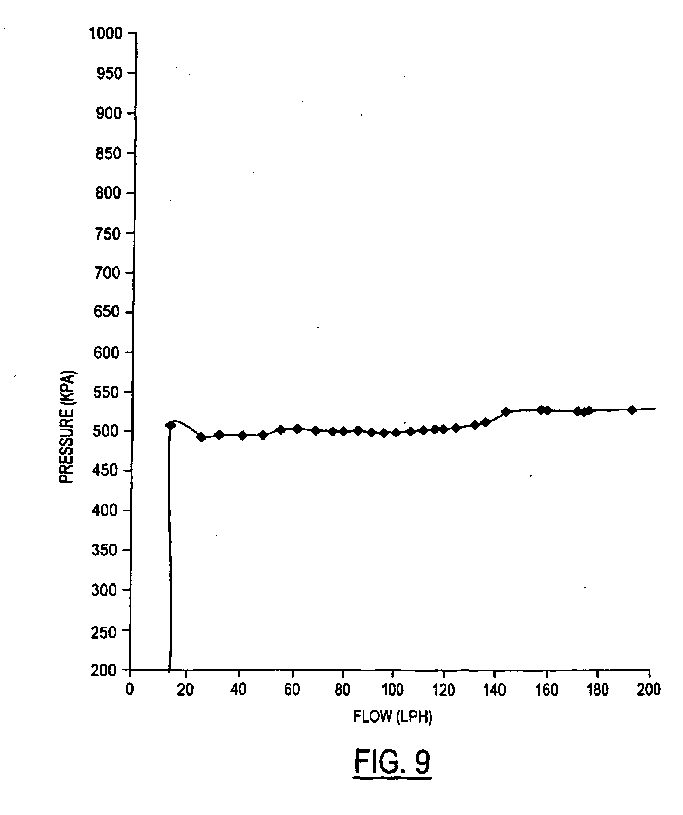

During operation, the effective surface area of the valve ball 16 that is acted upon by the fluid upstream of the valve seat 20 is proportional to the interface angle α. As the interface angle α increases, the effective surface area of the ball 16 that is subjected to the upstream fluid pressure also increases. For a given fluid pressure, the increased effective surface of the valve ball 16 tends to increase the force acting on the valve ball by the upstream fluid pressure. There is also a factor called the "Bernoulli Effect" that tends to decrease the pressure force on the valve ball 16 due to the velocity of the fluid in the flow gap 22. The "Bernoulli Effect" can be reduced by decreasing the minimum flow gap 22 at a fixed axial position of the ball 16. This force produced by the upstream fluid pressure is offset by the force of the spring 18, which likewise increases as the valve ball 16 is displaced further away from the valve seat 20, causing increased compression of the spring 18. Accordingly, the pressure control valve 10 can be designed to offset the increased spring force as the spring 18 is increasingly compressed, by increasing the effective surface area of the ball 16 and or decreasing the minimum flow gap 22 as the ball 16 is displaced further away from the valve seat 20. In this manner, the valve 10 can be constructed to provide a desired pressure curve or response over a wide range of fluid flow rates. For example, the valve 10 can be designed to have a relatively flat pressure curve over a wide range of flow rates as shown in FIG. 9 wherein the flow rate varies from about 10 or 20 liters per hour to about 200 liters per hour. The fluid flow rates may be even higher, on the order of 250 liters per hour, or more, as needed. Of course the pressure response or curve can be controlled as desired for a desired application or use of a pressure control valve.

One way to design a valve 10 is to determine the desired minimal clearance between the valve ball 16 and the valve bore 14 in various axial displacement positions of the valve ball 16, to oppose as desired the spring force acting on the ball, which is a known function of the spring constant of the spring 18. In other words, for a given displacement of the valve ball 16, the spring force acting on the ball can be readily calculated, and this force can be offset as desired with a desired net force in the opposite direction which is a function of the force of the fluid acting on the valve ball 16. Since the force of the fluid acting on the valve ball 16 is a function of the upstream pressure, axial position, interface angle and minimum flow gap 22, it can be calculated using Computational Fluid Dynamics (CFD) analysis or other numerical analysis. The analysis shows that the force increases as the minimum flow gap 22 is decreased and the force decreases as the minimum flow gap 22 is increased. In this manner, the shape or contour of the concave portion 32 can be iteratively determined with relative precision for a desired pressure characteristic or pressure response of the pressure control valve 10.

When the valve is closed, in other words the valve ball 16 is on the valve seat 20, the interface angle α is preferably between about 5° to about 85°, and more preferably between 35° and 75°. At very low interface angles, there is a relatively small surface area of the valve ball 16 subjected to the upstream fluid pressure, which may adversely affect its responsiveness. On the other hand, at a very large starting interface angle, issues such as corking or the tendency of the valve ball 16 to become stuck on the valve seat 20 can occur. Also, starting at a very large interface angle α reduces the increase in the interface angle α that is possible as the valve ball 16 is displaced because the maximum interface angle with a spherical valve ball is 90°, which is coincident with the diameter of the ball perpendicular to the direction of the fluid flow. In other words, the 90° interface angle α defines the maximum effective surface area of the valve ball 16.

In the embodiment shown in FIGS. 4-7, the interface angle α increases from a nominal angle of about 65° when the valve ball 16 is closed on the valve seat 20, to about 68° in FIG. 5 where the valve ball 16 is shown displaced from its closed position and away from the valve seat 20. In FIG. 6, the valve ball 16 is displaced further away from the valve seat 20 than in FIG. 5 and the interface angle α is shown nominally at about 74°. Finally, in FIG. 7 the valve ball 16 is displaced still further away from the valve seat 20 and the interface angle α is a nominal angle of about 85°. These representative angles are illustrative of only a single presently preferred embodiment, and are not intended to limit the invention.

The frustoconical portion 28 may provide a more consistent interface angle α when the valve ball 16 is seated against the valve seat 20, and may minimize the effect of changes in the valve body 12, such as may occur with use of a plastic valve body immersed in liquid fuel which tends to cause swelling of plastic. Since the interface angle α remains constant in the frustoconical portion 28 with a linearly tapered surface, a change in the valve bore diameter in this area will cause the valve ball 16 to engage the frustoconical portion 28 in a different axial location, but it will not change the interface angle α. Hence, such a change will not change the effective surface area of the valve ball 16 that is acted on by the upstream fluid pressure. In this manner, the "cracking" or initial opening pressure of the valve 10 will not be affected by such changes in the housing.

If desired, the valve bore 14 can be formed without any frustoconical portion 28. The entire valve bore 14 can be made with a non-linear or non-uniform taper as described with reference to the concave portion 32 of the embodiment just described. The non-uniform taper provides a varying rate of change of the diameter of the valve bore 14 for given increments of axial distance. Alternatively, as shown in FIG. 8, a valve body 12' may have a valve bore 14' with a plurality of linearly tapered segments 40 disposed at different angles from one another. While each individual segment 40 has a straight linear taper, the valve bore 14 as a whole does not have a straight linear taper along its entire axial length. As also shown in FIG. 8, the interface line 36 may be generally perpendicular to the linear segment closest to the valve ball 16, and the interface angle α is defined between the axis 34 of the valve bore 14' and the interface line 36.

Of course, still other modifications, variations or arrangements will be apparent to those of ordinary skill in the art. The preceding description of the presently preferred embodiments of the invention has been provided in terms of illustration, and not limitation. Several alternate constructions and arrangements have been disclosed, and as mentioned above, others will be apparent to persons of ordinary skill in the art, all of which fall within the scope of the invention as defined by the appended claims. For example, without limitation, the valve head has been shown as a spherical valve ball, but the valve head could take on other shapes or arrangements, as desired for an application or use of the valve.

## Claims

1. A pressure control valve, comprising:
a valve body (12) having a valve bore (14) with a valve seat (20) and a longitudinal axis (34), the valve bore (14) having at least one circumferentially continuous surface (32, 40) with a diameter that increases from its upstream end closest to the valve seat (20) toward its downstream end; a valve head (16) having a surface and received at least in part in the valve bore (14), yieldably biased to a closed position against the valve seat (20), and being moveable to open positions spaced from the valve seat (20) to allow fluid to flow between the surfaces through the valve bore (14); and
**characterized by** the diameter of the continuous surface (32, 40) of the bore (14) increasing non-linearly from its upstream end toward its downstream end and the surfaces of the bore (14) and the valve head (16) being configured to form an interface angle (α) at least when the valve head (16) is displaced from the valve seat (20), between the longitudinal axis (34) and an interface line (36) intersecting the points on the valve head (16) surface and the bore surface (32, 40) defining the minimum distance between these surfaces so that the interface angle (α) increases as the valve head (16) is increasingly displaced from the valve seat (20) to regulate the pressure of fluid flowing between these surfaces and downstream of the vale head (16).

2. The pressure control valve of claim 1 which also comprises a spring (18) yieldably biasing the valve head (16) against the valve seat (20), the spring (18) being disposed downstream of the valve head (16) such that increasing displacement of the valve head away from the valve seat causes increasing displacement of the spring.

3. The pressure control valve of claim 1 wherein the valve bore (14) has a concave portion (32) with a diameter that increases non-linearly as the concave portion extends downstream.

4. The pressure control valve of claim 1 wherein the concave portion (32) is generally arcuate.

5. The pressure control valve of claim 1 wherein the valve bore (14) is defined at least in part by a plurality of linearly tapered segments (40) arranged so that the valve bore (14) as a whole is not linearly tapered along its entire axial length.

6. The pressure control valve of claim 1 wherein the valve head is a spherical valve ball (16) having a diameter that is greater than the diameter of the valve bore (14) in the area of the valve seat (20).

7. The pressure control valve of claim 6 wherein the interface line (36) intersects the center of the valve ball (16) and the location of the valve bore (14) closest to the valve ball.

8. The pressure control valve of claim 5 wherein the interface line (36) is defined within the portion of the valve bore (14) defined by said plurality of linearly tapered segments (40) and the interface line (36) is perpendicular to the valve bore (14) in at least some positions of the valve head (16) when the valve head is spaced from the valve seat(20).

9. The pressure control valve of claim 2 wherein the spring (18) is a coil spring having a spring rate and increased displacement of the valve head (16) away from the valve seat (20) causes an increase in the force of the spring (18) acting on the valve head (16), the valve bore (14) being constructed so that the interface angle (α) increases as a function of the spring force of the spring.

10. The pressure control valve of claim 9 wherein the interface angle (α) increases as a function of the spring force of the spring (18) to offset the increased spring force that acts on the valve head (16) as the valve head is increasingly displaced from the valve seat (20).

11. The pressure control valve of claim 10 wherein the interface angle (α) increases as the valve head (16) is increasingly displaced from the valve seat (20) so that the valve has a substantially constant pressure response for fluid flow rates through the valve of between about 10 liters per hour and 250 liters per hour.

12. The pressure control valve of claim 1 wherein the valve head comprises a valve ball (16) and the pressure control valve also comprises a spring (18) yieldably biasing the valve ball against the valve seat (20), the spring (18) being disposed downstream of the valve ball (16) such that increasing displacement of the valve ball away from the valve seat causes increasing displacement of the spring.

13. The pressure control valve of claim 12 wherein the valve bore (14) has a concave portion (32) with a diameter that increases non-linearly as the concave portion extends downstream.

14. The pressure control valve of claim 14 wherein the concave portion (32) is generally arcuate.

15. The pressure control valve of claim 12 wherein the valve bore (14) is defined at least in part by a plurality of linearly tapered segments (40) arranged so that the valve bore (14) as a whole is not linearly tapered along its entire axial length.

16. The pressure control valve of claim 12 wherein the spring (18) is a coil spring having a spring rate wherein increased displacement of the valve head (16) away from the valve seat (20) causes an increase in the force of the spring (18) acting on the valve head (16), the valve bore (14) being constructed so that the interface angle (α) increases as a function of the spring force of the spring.

17. The pressure control valve of claim 16 wherein the interface angle (α) increases as a function of the spring force of the spring (18) to offset the increased spring force that acts on the valve head (16) as the valve head is increasingly displaced from the valve seat (20).

18. The pressure control valve of claim 17 wherein the interface angle (α) increases as the valve head (16) is increasingly displaced from the valve seat (20) so that the valve has a substantially constant pressure response for fluid flow rates through the valve of between about 10 liters per hour and 250 liters per hour.

19. The pressure control valve of claim 1 wherein the valve head comprises a valve ball (16) yieldably biased to a closed position against the valve seat (20), and being moveable to an open position spaced from the valve seat (20) to allow fluid to flow through the valve bore (14) around the valve ball(16), and wherein for a given position of the valve ball (16) relative to the valve seat (20) an effective surface area of the valve ball is acted upon by the fluid tending to displace the ball in a direction away from the valve seat, and the effective surface area of the valve ball that is acted upon by the fluid increases as the valve ball is increasingly displaced away from the valve seat.

20. The pressure control valve of claim 19 wherein the circumferentially continuous surface (32, 40) of the valve bore is generally arcuate.

21. The pressure control valve of claim 19 wherein the circumferentially continuous surface (32, 40) of the valve bore (14) is defined at least in part by a plurality of linearly tapered segments (40) arranged so that the valve bore (14) as a whole does not have a straight linear taper along its entire axial length.

22. A method of making a pressure control valve, comprising the steps of:
forming a valve bore (14) in a valve body (12) so that the valve bore (14) has a longitudinal axis (34), a valve seat (20) and at least one circumferentially continuous surface (32) with a diameter that increases as the at least one surface (32, 40) extends away from the valve seat (20);
inserting a valve ball (16) into the valve bore (14), the valve ball (16) having a diameter greater than the diameter of the valve bore (14) in the area of the
valve seat (20) but less than the diameter of the valve bore in the area of the at least one surface (32, 40) of the valve bore (14);
inserting a spring (18) at least partially in the valve bore (14) so that one end of the spring (18) can engage and yieldably bias the valve ball (16) toward the valve seat (20); and **characterized by**
the diameter of the continuous surface (32, 40) of the bore (14) increasing non-linearly from its upstream end toward its downstream end and the surfaces of the bore (14) and the valve ball (16) being configured to form at least when the valve ball (16) is displaced from the valve seat (20), an interface angle (α) defined between said longitudinal axis (34) and an interface line (36) intersecting a point on the valve ball (16) and a point of the valve bore (14) defining the minimum distance between these surfaces so that the interface angle (α) increases as the valve ball (16) is increasingly displaced from the valve seat (20) to regulate the pressure of fluid flowing between these surfaces and downstream of the valve ball (20).

23. The method of claim 22 wherein the step of forming the valve bore (14) including forming the continuous surface (32, 40) of the valve bore (14) so that the interface angle (α) increases as the valve ball (16) is increasingly displaced from the valve seat (20), is performed by calculating the spring force at various positions of the valve ball (16) spaced from the valve seat (20), determining an effective surface area of the valve ball (16) on which a fluid at a predetermined pressure needs to act to offset the spring force at each position of the valve ball as desired, determining the interface angle (α) that corresponds to each determined effective surface area for each position of the valve ball, and then forming the valve bore (14) with a shape that provides the determined interface angle at each position of the valve ball (16).

24. The method of claim 23 wherein the effective surface area and interface angle (α) are chosen to provide a net force on the valve ball (16) that offsets the increase in the spring force acting on the valve ball as the valve ball is increasingly displaced from the valve seat (20) so that the pressure control valve has a substantially constant pressure response over a range of positions of the valve ball relative to the valve seat.

## Patentansprüche

1. Drucksteuerventil, mit:
einem Ventilkörper (12) mit einer Ventilbohrung (14) mit einem Ventilsitz (20) und einer Längsachse (34), wobei die Ventilbohrung (14) mindestens eine am Umfang durchgehende Fläche (32, 40) mit einem Durchmesser aufweist, welcher von seinem stromauf gelegenen, am nächsten zu dem Ventilsitz (20) befindlichen Ende in Richtung zu seinem stromab gelegenen Ende zunimmt; einem Ventilkopf (16) mit einer Fläche und wenigstens zum Teil in Aufnahme in der Ventilbohrung (14), der nachgiebig in eine geschlossene Position gegen den Ventilsitz (20) vorgespannt und in offene, von dem Ventilsitz (20) beabstandete Stellungen bewegbar ist, um ein Fluid zwischen den Flächen durch die Ventilbohrung (14) hindurch strömen zu lassen; und
**dadurch gekennzeichnet, dass** der Durchmesser der durchgehenden Fläche (32, 40) der Bohrung (14) von seinem stromauf gelegenen Ende in Richtung zu seinem stromab gelegenen Ende nichtlinear zunimmt und die Flächen der Bohrung (14) und des Ventilkopfes (16) derart konfiguriert sind, dass sie zumindest dann, wenn der Ventilkopf (16) von dem Ventilsitz (20) weg verschoben ist, einen Grenzflächenwinkel (α) zwischen der Längsachse (34) und einer Grenzflächenlinie (36) bilden, welche die Punkte an der Fläche des Ventilkopfes (16) schneidet, und die Bohrungsfläche (32, 40) den Mindestabstand zwischen diesen Flächen bildet, so dass der Grenzflächenwinkel (α) größer wird, wenn der Ventilkopf (16) zunehmend von dem Ventilsitz (20) weg verschoben wird, um den Druck des zwischen diesen Flächen und stromab des Ventilkopfes (16) strömenden Fluids zu regulieren.

2. Drucksteuerventil nach Anspruch 1, das auch eine Feder (18) umfasst, welche den Ventilkopf (16) nachgiebig gegen den Ventilsitz (20) vorspannt, wobei die Feder (18) stromab des Ventilkopfes (16) derart angeordnet ist, dass eine zunehmende Verschiebung des Ventilkopfes von dem Ventilsitz weg zu einer zunehmenden Verschiebung der Feder führt.

3. Drucksteuerventil nach Anspruch 1, wobei die Ventilbohrung (14) einen konkaven Abschnitt (32) mit einem Durchmesser aufweist, der nichtlinear zunimmt, wenn sich der konkave Abschnitt stromab erstreckt.

4. Drucksteuerventil nach Anspruch 1, wobei der konkave Abschnitt (32) im Wesentlichen bogenförmig ist.

5. Drucksteuerventil nach Anspruch 1, wobei die Ventilbohrung (14) wenigstens zum Teil von einer Mehrzahl von sich linear verjüngenden Segmenten (40) gebildet ist, die derart angeordnet sind, dass sich die Ventilbohrung (14) als Ganzes nicht entlang ihrer gesamten Axiallänge linear verjüngt.

6. Drucksteuerventil nach Anspruch 1, wobei der Ventilkopf eine kugelförmige Ventilkugel (16) mit einem Durchmesser ist, der größer als der Durchmesser der Ventilbohrung (14) im Bereich des Ventilsitzes (20) ist.

7. Drucksteuerventil nach Anspruch 6, wobei die Grenzflächenlinie (36) die Mitte der Ventilkugel (16) und die der Ventilkugel am nächsten befindliche Lagestelle der Ventilbohrung (14) schneidet.

8. Drucksteuerventil nach Anspruch 5, wobei die Grenzflächenlinie (36) innerhalb des Abschnitts der von der Mehrzahl von sich linear verjüngenden Segmenten (40) gebildeten Ventilbohrung (14) gebildet ist und die Grenzflächenlinie (36) in wenigstens einigen Abschnitten des Ventilkopfes (16) senkrecht zu der Ventilbohrung (14) verläuft, wenn sich der Ventilkopf in einem Abstand von dem Ventilsitz (20) befindet.

9. Drucksteuerventil nach Anspruch 2, wobei die Feder (18) eine Schraubenfeder mit ei- - ner Federkonstanten ist und es durch die größere Verschiebung des Ventilkopfes (16) von dem Ventilsitz (20) weg zu einer Zunahme der Kraft der auf den Ventilkopf (16) wirkenden Feder (18) kommt, wobei die Ventilbohrung (14) derart konstruiert ist, dass der Grenzflächenwinkel (α) als Funktion der Federkraft der Feder größer wird.

10. Drucksteuerventil nach Anspruch 9, wobei der Grenzflächenwinkel (α) als Funktion der Federkraft der Feder (18) größer wird, um die größere Federkraft auszugleichen, die auf den Ventilkopf (16) wirkt, wenn der Ventilkopf zunehmend von dem Ventilsitz (20) weg verschoben wird.

11. Drucksteuerventil nach Anspruch 10, wobei der Grenzflächenwinkel (α) größer wird, wenn der Ventilkopf (16) zunehmend von dem Ventilsitz (20) weg verschoben wird, so dass das Ventil eine im Wesentlichen gleich bleibende Druckreaktion für Fluiddurchflussmengen zwischen etwa 10 Litern pro Stunde und 250 Litern pro Stunde durch das Ventil hindurch aufweist.

12. Drucksteuerventil nach Anspruch 1, wobei der Ventilkopf eine Ventilkugel (16) umfasst und das Drucksteuerventil auch eine Feder (18) umfasst, welche die Ventilkugel nachgiebig gegen den Ventilsitz (20) vorspannt, wobei die Feder (18) stromab der Ventilkugel (16) derart angeordnet ist, dass es durch die zunehmende Verschiebung der Ventilkugel von dem Ventilsitz weg zu einer zunehmenden Verschiebung der Feder kommt.

13. Drucksteuerventil nach Anspruch 12, wobei die Ventilbohrung (14) einen konkaven Abschnitt (32) mit einem Durchmesser aufweist, der nichtlinear zunimmt, wenn sich der konkave Abschnitt stromab erstreckt.

14. Drucksteuerventil nach Anspruch 13, wobei der konkave Abschnitt (32) im Wesentlichen bogenförmig ist.

15. Drucksteuerventil nach Anspruch 12, wobei die Ventilbohrung (14) wenigstens zum Teil von einer Mehrzahl von sich linear verjüngenden Segmenten (40) gebildet ist, die derart angeordnet sind, dass sich die Ventilbohrung (14) als Ganzes entlang ihrer gesamten Axiallänge nichtlinear verjüngt.

16. Drucksteuerventil nach Anspruch 12, wobei die Feder (18) eine Schraubenfeder mit einer Federkonstanten ist, wobei es durch die größere Verschiebung des Ventilkopfes (16) von dem Ventilsitz (20) weg zu einer Zunahme der Kraft der auf den Ventilkopf (16) wirkenden Feder (18) kommt, wobei die Ventilbohrung (14) derart konstruiert ist, dass der Grenzflächenwinkel (α) als Funktion der Federkraft der Feder größer wird.

17. Drucksteuerventil nach Anspruch 16, wobei der Grenzflächenwinkel (α) als Funktion der Federkraft der Feder (18) größer wird, um die größere Federkraft auszugleichen, die auf den Ventilkopf (16) wirkt, wenn der Ventilkopf zunehmend von dem Ventilsitz (20) weg verschoben wird.

18. Drucksteuerventil nach Anspruch 17, wobei der Grenzflächenwinkel (α) größer wird, wenn der Ventilkopf (16) zunehmend von dem Ventilsitz (20) weg verschoben wird, so dass das Ventil eine im Wesentlichen gleich bleibende Druckreaktion für Fluiddurchflussmengen zwischen etwa 10 Litern pro Stunde und 250 Litern pro Stunde durch das Ventil hindurch aufweist.

19. Drucksteuerventil nach Anspruch 1, wobei der Ventilkopf eine Ventilkugel (16) umfasst, die nachgiebig in eine geschlossene Stellung gegen den Ventilsitz (20) vorgespannt ist und in eine offene, von dem Ventilsitz (20) beabstandete Stellung bewegbar ist, um ein Fluid durch die Ventilbohrung (14) hindurch um die Ventilkugel (16) herum strömen zu lassen, und wobei das Fluid für eine gegebene Stellung der Ventilkugel (16) relativ zu dem Ventilsitz (20) auf einen effektiven Oberflächenbereich der Ventilkugel wirkt und dazu neigt, die Kugel in einer Richtung von dem Ventilsitz weg zu verschieben, und der effektive Oberflächenbereich der Ventilkugel, auf welchen das Fluid einwirkt, größer wird, wenn die Ventilkugel zunehmend von dem Ventilsitz weg verschoben wird.

20. Drucksteuerventil nach Anspruch 19, wobei die am Umfang durchgehende Fläche (32, 40) der Ventilbohrung im Wesentlichen bogenförmig ist.

21. Drucksteuerventil nach Anspruch 19, wobei die am Umfang durchgehende Fläche (32, 40) der Ventilbohrung (14) wenigstens zum Teil von einer Mehrzahl von sich linear verjüngenden Segmenten (40) gebildet ist, die derart angeordnet sind, dass die Ventilbohrung (14) als Ganzes keine gerade, lineare Verjüngung entlang ihrer gesamten Axiallänge aufweist.

22. Verfahren zur Herstellung eines Drucksteuerventils, mit den folgenden Schritten:
Ausbilden einer Ventilbohrung (14) in einem Ventilkörper (12), so dass die Ventilbohrung (14) eine Längsachse (34), einen Ventilsitz (20) und wenigstens eine am Umfang durchgehende Fläche (32, 40) mit einem Durchmesser aufweist, welcher zunimmt, wenn sich die wenigstens eine Fläche (32, 40) von dem Ventilsitz (20) weg erstreckt;
Einsetzen einer Ventilkugel (16) in die Ventilbohrung (14), wobei die Ventilkugel (16) einen Durchmesser aufweist, der größer als der Durchmesser der Ventilbohrung (14) im Bereich des Ventilsitzes (20), jedoch kleiner als der Durchmesser der Ventilbohrung im Bereich der wenigstens einen Fläche (32, 40) der Ventilbohrung (14) ist;
wenigstes teilweises Einsetzen einer Feder (18) in die Ventilbohrung (14), so dass ein Ende der Feder (18) an der Ventilkugel (16) angreifen und diese nachgiebig in Richtung zu dem Ventilsitz (20) vorspannen kann; und **dadurch gekennzeichnet, dass**
der Durchmesser der durchgehenden Fläche (32, 40) der Bohrung (14) von seinem stromauf gelegenen Ende in Richtung zu seinem stromab gelegenen Ende nichtlinear zunimmt und die Flächen der Bohrung (14) und des Ventilkopfes (16) derart konfiguriert sind, dass sie wenigstens dann, wenn der Ventilkopf (16) von dem Ventilsitz (20) weg verschoben ist, einen Grenzflächenwinkel (α) bilden, der zwischen der Längsachse (34) und einer Grenzflächenlinie (36) gebildet ist, welche einen Punkt an dem Ventilkopf (16) schneidet und ein Punkt der Ventilbohrung (14) den Mindestabstand zwischen diesen Flächen bildet, so dass der Grenzflächenwinkel (α) größer wird, wenn der Ventilkopf (16) zunehmend von dem Ventilsitz (20) weg verschoben wird, um den Druck des zwischen diesen Flächen und stromab der Ventilkugel (20) strömenden Fluids zu regulieren.

23. Verfahren nach Anspruch 22, wobei der Schritt des Ausbildens der Ventilbohrung (14) einschließlich des Ausbildens der durchgehenden Fläche (32, 40) der Ventilbohrung (14), so dass der Grenzflächenwinkel (α) größer wird, wenn die Ventilkugel (16) zunehmend von dem Ventilsitz (20) verschoben wird, durch das Berechnen der Federkraft an verschiedenen Stellungen der von dem Ventilsitz (20) beabstandeten Ventilkugel (16), das Bestimmen eines effektiven Flächenbereiches der Ventilkugel (16), an welchem ein Fluid mit einem vorgegebenen Druck wirken muss, um die Federkraft bei Bedarf an jeder Stellung der Ventilkugel auszugleichen, das Bestimmen des Grenzflächenwinkels (α), der zu jedem ermittelten effektiven Flächenbereich der Ventilkugel korrespondiert, und dann das Ausbilden der Ventilkugel (14) mit einer Form erfolgt, durch welche der ermittelte Grenzflächenwinkel (α) an jeder Stellung der Ventilkugel (16) bereitgestellt wird.

24. Verfahren nach Anspruch 23, wobei der effektive Flächenbereich und der Grenzflächenwinkel (α) derart gewählt werden, dass an der Ventilkugel (16) eine Nutzkraft bereitgestellt wird, welche die Zunahme der an der Ventilkugel wirkenden Federkraft ausgleicht, wenn die Ventilkugel zunehmend von dem Ventilsitz (20) weg verschoben wird, so dass das Drucksteuerventil eine im Wesentlichen gleich bleibende Druckreaktion über einen Bereich von Stellungen der Ventilkugel relativ zu dem Ventilsitz aufweist.

## Revendications

1. Vanne de régulation de pression, comprenant :
un corps de vanne (12) ayant un alésage de vanne (14) avec un siège de vanne (20) et un axe longitudinal (34), l'alésage de vanne (14) ayant au moins une surface continue (32, 40) dans le sens de la circonférence avec un diamètre qui augmente depuis son extrémité amont la plus proche du siège de vanne (20) en direction de son extrémité aval ; une tête de vanne (16) ayant une surface et reçue au moins en partie dans l'alésage de vanne (14), poussée de façon élastique vers une position fermée contre le siège de vanne (20), et étant mobile vers des positions ouvertes espacées du siège de vanne (20) pour permettre au fluide de s'écouler entre les surfaces à travers l'alésage de vanne (14) ; et
**caractérisée par le fait que** le diamètre de la surface continue (32, 40) de l'alésage (14) augmente de façon non linéaire depuis son extrémité amont vers son extrémité aval, et **par le fait que** les surfaces de l'alésage (14) et de la tête de vanne (16) sont configurées pour former un angle d'interface (α) au moins quand la tête de vanne (16) est déplacée depuis le siège de vanne (20), entre l'axe longitudinal (34) et la ligne d'interface (36) réalisant l'intersection avec les points sur la surface de la tête de vanne (16) et la surface d'alésage (32, 40) définissant la distance minimale entre ces surfaces de sorte que l'angle d'interface (α) augmente lorsque la tête de vanne (16) est déplacée de façon accrue depuis le siège de vanne (20) pour réguler la pression du fluide s'écoulant entre ces surfaces et en aval de la tête de vanne (16).

2. Vanne de régulation de pression selon la revendication 1, qui comprend également un ressort (18) poussant de façon élastique la tête de vanne (16) contre le siège de vanne (20), le ressort (18) étant disposé en aval de la tête de vanne (16) de sorte que l'augmentation du déplacement de la tête de vanne loin du siège de vanne provoque l'augmentation du déplacement du ressort.

3. Vanne de régulation de pression selon la revendication 1, dans laquelle l'alésage de vanne (14) a une portion concave (32) avec un diamètre qui augmente de façon non linéaire lorsque la portion concave s'étend en aval.

4. Vanne de régulation de pression selon la revendication 1, dans laquelle la portion concave (32) est généralement arquée.

5. Vanne de régulation de pression selon la revendication 1, dans laquelle l'alésage de vanne (14) est défini au moins en partie par une pluralité de segments (40) linéairement coniques agencés de sorte que l'alésage de vanne (14) en tant qu'ensemble n'est pas linéairement conique sur toute sa longueur axiale.

6. Vanne de régulation de pression selon la revendication 1, dans laquelle la tête de vanne est une bille de vanne (16) sphérique ayant un diamètre qui est plus grand que le diamètre de l'alésage de vanne (14) dans la zone du siège de vanne (20).

7. Vanne de régulation de pression selon la revendication 6, dans laquelle la ligne d'interface (36) coupe le centre de la bille de vanne (16) et l'emplacement de l'alésage de vanne (14) le plus proche de la bille de vanne.

8. Vanne de régulation de pression selon la revendication 5, dans laquelle la ligne d'interface (36) est définie à l'intérieur de la portion de l'alésage de vanne (14) définie par ladite pluralité de segments (40) linéairement coniques, et dans laquelle la ligne d'interface (36) est perpendiculaire à l'alésage de vanne (14) dans au moins certaines positions de la tête de vanne (16) quand la tête de vanne est espacée du siège de vanne (20).

9. Vanne de régulation de pression selon la revendication 2, dans laquelle le ressort (18) est un ressort hélicoïdal ayant une constante de rappel, et dans laquelle l'augmentation du déplacement de la tête de vanne (16) loin du siège de vanne (20) provoque une augmentation de la force du ressort (18) agissant sur la tête de vanne (16), l'alésage de vanne (14) étant conçu de sorte que l'angle d'interface (α) augmente en fonction de la force de ressort du ressort.

10. Vanne de régulation de pression selon la revendication 9, dans laquelle l'angle d'interface (α) augmente en fonction de la force de ressort du ressort (18) pour décaler la force de ressort accrue qui agit sur la tête de vanne (16) lorsque la tête de vanne est déplacée du siège de vanne (20) de façon accrue.

11. Vanne de régulation de pression selon la revendication 10, dans laquelle l'angle d'interface (α) augmente lorsque la tête de vanne (16) est déplacée du siège de vanne (20) de façon accrue de sorte que la vanne a une réponse en pression essentiellement constante pour des débits de fluide traversant la vanne compris entre environ 10 litres par heure et 250 litres par heure.

12. Vanne de régulation de pression selon la revendication 1, dans laquelle la tête de vanne comprend une bille de vanne (16), et dans laquelle la vanne de régulation de pression comprend également un ressort (18) poussant de façon élastique la bille de vanne contre le siège de vanne (20), le ressort (18) étant disposé en aval de la bille de vanne (16) de sorte que l'augmentation du déplacement de la bille de vanne loin du siège de vanne provoque une augmentation du déplacement du ressort.

13. Vanne de régulation de pression selon la revendication 12, dans laquelle l'alésage de vanne (14) a une portion concave (32) ayant un diamètre qui augmente de façon non linéaire lorsque la portion concave s'étend en aval.

14. Vanne de régulation de pression selon la revendication 14, dans laquelle la portion concave (32) est généralement arquée.

15. Vanne de régulation de pression selon la revendication 12, dans laquelle l'alésage de vanne (14) est défini au moins en partie par une pluralité de segments (40) linéairement coniques agencés de sorte que l'alésage de vanne (14) en tant qu'ensemble n'est pas linéairement conique sur toute sa longueur axiale.

16. Vanne de régulation de pression selon la revendication 12, dans laquelle le ressort (18) est un ressort hélicoïdal ayant une constante de rappel, et dans laquelle l'augmentation du déplacement de la tête de vanne (16) loin du siège de vanne (20) provoque une augmentation de la force du ressort (18) agissant sur la tête de vanne (16), l'alésage de vanne (14) étant conçu de sorte que l'angle d'interface (α) augmente en fonction de la force de ressort du ressort.

17. Vanne de régulation de pression selon la revendication 16, dans laquelle l'angle d'interface (α) augmente en fonction de la force de ressort du ressort (18) pour décaler la force de ressort accrue qui agit sur la tête de vanne (16) lorsque la tête de vanne est déplacée du siège de vanne (20) de façon accrue.

18. Vanne de régulation de pression selon la revendication 17, dans laquelle l'angle d'interface (α) augmente lorsque la tête de vanne (16) est déplacée du siège de vanne (20) de façon accrue de sorte que la vanne a une réponse en pression essentiellement constante pour des débits de fluide traversant la vanne compris entre environ 10 litres par heure et 250 litres par heure.

19. Vanne de régulation de pression selon la revendication 1, dans laquelle la tête de vanne comprend une bille de vanne (16) poussée de façon élastique vers une position fermée contre le siège de vanne (20), et étant mobile vers une position ouverte espacée du siège de vanne (20) pour permettre au fluide de traverser l'alésage de vanne (14) autour de la bille de vanne (16), et dans laquelle, pour une position donnée de la bille de vanne (16) par rapport au siège de vanne (20), une aire de surface effective de la bille de vanne reçoit l'action du fluide tendant à déplacer la bille dans une direction loin du siège de vanne, et l'aire de surface effective de la bille de vanne qui reçoit l'action du fluide augmente lorsque la bille de vanne est déplacée de façon accrue loin du siège de vanne.

20. Vanne de régulation de pression selon la revendication 19, dans laquelle la surface continue (32, 40) dans le sens circonférentiel de l'alésage de vanne est généralement arquée.

21. Vanne de régulation de pression selon la revendication 19, dans laquelle la surface continue (32, 40) dans le sens circonférentiel de l'alésage de vanne (14) est définie au moins en partie par une pluralité de segments (40) linéairement coniques agencés de sorte que l'alésage de vanne (14) en tant qu'ensemble n'a pas un cône linéaire droit sur toute sa longueur axiale.

22. Méthode de fabrication d'une vanne de régulation de pression, comprenant les étapes consistant à :
former un alésage de vanne (14) dans un corps de vanne (12) de sorte que l'alésage de vanne (14) a un axe longitudinal (34), un siège de vanne (20) et au moins une surface continue (32) dans le sens circonférentiel avec un diamètre qui augmente lorsque la surface (32, 40), au moins au nombre de un, s'étend loin du siège de vanne (20) ;
insérer une bille de vanne (16) dans l'alésage de vanne (14), la bille de vanne (16) ayant un diamètre qui est plus grand que le diamètre de l'alésage de vanne (14) dans la zone du siège de vanne (20) mais plus petit que le diamètre de l'alésage de vanne dans la zone de la surface (32, 40), au moins au nombre de un, de l'alésage de vanne (14) ;
insérer un ressort (18) au moins partiellement dans l'alésage de vanne (14) de façon à ce qu'une extrémité du ressort (18) puisse mettre en prise et pousser de façon élastique la bille de vanne (16) vers le siège de vanne (20) ; et **caractérisée par**
**le fait que** le diamètre de la surface continue (32, 40) de l'alésage (14) augmente de façon non linéaire depuis son extrémité amont vers son extrémité aval, et le fait que les surfaces de l'alésage (14) et de la bille de vanne (16) sont configurées pour former, au moins quand la bille de vanne (16) est déplacée depuis le siège de vanne (20), un angle d'interface (α) défini entre l'axe longitudinal (34) et la ligne d'interface (36) réalisant l'intersection avec un point sur la surface de la bille de vanne (16) et un point de l'alésage de vanne (14) définissant la distance minimale entre ces surfaces de sorte que l'angle d'interface (α) augmente lorsque la bille de vanne (16) est déplacée de façon accrue depuis le siège de vanne (20) pour réguler la pression du fluide s'écoulant entre ces surfaces et en aval de la bille de vanne (20).

23. Méthode selon la revendication 22, dans laquelle l'étape consistant à former l'alésage de vanne (14), comprenant la formation de la surface continue (32, 40) de l'alésage de vanne (14) de sorte que l'angle d'interface (α) augmente lorsque la bille de vanne (16) est déplacée de façon accrue depuis le siège de vanne (20), est effectuée en calculant la force de ressort dans diverses positions de la bille de vanne (16) espacées du siège de vanne (20), en déterminant une aire de surface effective de la bille de vanne (16) sur laquelle un fluide, à une pression prédéfinie, doit agir pour décaler la force de ressort dans chaque position de la bille de vanne selon les souhaits, en déterminant l'angle d'interface (α) qui correspond à chaque aire de surface effective définie pour chaque position de la bille de vanne, et puis en formant l'alésage de vanne (14) avec une forme qui fournit l'angle d'interface défini à chaque position de la bille de vanne (16).

24. Méthode selon la revendication 23, dans laquelle l'aire de surface effective et l'angle d'interface (α) sont choisis pour produire une force nette sur la bille de vanne (16) qui décale l'augmentation de la force de ressort agissant sur la bille de vanne lorsque la bille de vanne est déplacée de façon accrue depuis le siège de vanne (20) de sorte que la vanne de régulation de pression a une réponse en pression essentiellement constante sur une plage de positions de la bille de vanne par rapport au siège de vanne.
